# EUROPEAN PATENT APPLICATION

(11) **EP 4 482 218 A1**
(43) Date of publication of application: **25.12.2024**
(21) Application number: 22926411.4
(22) Date of filing: 16.02.2022
(51) Int. Cl.: H04W 48/16, H04W 36/00

(54) **CELL ACCESS CONTROL METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Stöckeler, Ferdinand
(86) International application number: PCT/CN2022/076527
(87) International publication number: WO 2023/155073

(57) **Abstract**

The present disclosure relates to a cell access control method and apparatus, and a storage medium. The cell access control method is applied to a terminal, and the cell access control method comprises: determining cell access configuration information, wherein the cell access configuration information is used for configuring first cell access indication information corresponding to a first-type terminal, second cell access indication information corresponding to a second-type terminal and third cell access indication information corresponding to a third-type terminal, with the capability of the first-type terminal being greater than the capability of the second-type terminal, and the capability of the second-type terminal being greater than the capability of the third-type terminal; and acquiring the third cell access indication information. By means of the present disclosure, differentiated requirements of different types of terminals during cell access can be met, the network load is balanced, and an unnecessary time delay and unnecessary energy consumption caused when a terminal accesses a cell are reduced.

## Description

### TECHNICAL FIELD

The disclosure relates to the field of communication technology, and in particular to cell access controlling methods and apparatus, and a storage medium.

### BACKGROUND

With the continuous development of Internet of Things (IoT) applications, a new type of terminal has been proposed to meet requirements of IoT devices. In the related art, following the reduced capability terminal (Redcap terminal), an evolved reduced capability terminal (eRedcap terminal) is proposed.

Compared with the Redcap terminal, the terminal capability of the eRedcap terminal may be further reduced. For example, the bandwidth of the eRedcap terminal is further reduced to 5MHZ and the processing time will also be relaxed, which will have an impact on network scheduling and network load. Further, since the network update and upgrade are also needed, and thus some networks may not support.

With the introduction of the eRedcap terminal, the terminal capability has differentiated. The existing cell access controlling method cannot meet differentiated terminal requirements, which is not conducive to flexible control by operators.

### SUMMARY

In order to overcome problems existing in the related art, the disclosure provides cell access control methods and apparatuses and a storage medium.

In a first aspect according to embodiments of the disclosure, a cell access controlling method is provided. The method is performed by a terminal. The cell access controlling method includes:
determining cell access configuration information, in which the cell access configuration information is used for configuring first cell access indication information corresponding to a first type of terminal, second cell access indication information corresponding to a second type of terminal, and third cell access indication information corresponding to a third type of terminal, in which a capability of the first type of terminal is greater than a capability of the second type of terminal, and the capability of the second type of terminal is greater than a capability of the third type of terminal; and obtaining the third cell access indication information.

In an implementation, the first cell access indication information, the second cell access indication information, and the third cell access indication information each includes cell access barred indication information for indicating whether to allow a terminal to camp on a cell.

In an implementation, the cell access barred indication information indicated by the third cell access indication information is different from the cell access barred indication information indicated by the second cell access indication information and the first cell access indication information.

In an implementation, obtaining the third cell access indication information includes:
in response to the cell access barred indication information, indicated by the first cell access indication information, indicating that camping on the cell is allowed and in response to the cell access barred indication information, indicated by the second cell access indication information, indicating that camping on the call is allowed, obtaining the cell access barred indication information indicated by the third cell access indication information.

In an implementation, obtaining the third cell access indication information includes:
in response to the cell access barred indication information, indicated by the second cell access indication information, indicating that camping on the cell is allowed, obtaining the cell access barred indication information indicated by the third cell access indication information.

In an implementation, obtaining the third cell access indication information includes:
in response to the cell access barred indication information, indicated by the first cell access indication information, indicating that camping on a cell is allowed, obtaining the cell access barred indication information indicated by the third cell access indication information.

In an implementation, the cell access barred indication information indicated by the third cell access indication information is the cell access barred indication information indicated by the second cell access indication information.

In an implementation, the first cell access indication information, the second cell access indication information, and the third cell access indication information each further includes an intra-frequency cell reselection identification for indicating whether to allow the terminal to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, obtaining the third cell access indication information includes:
in response to the cell access barred indication information, indicated by the third cell access indication information, indicating that camp on the cell is not allowed, obtaining the intra-frequency cell reselection identification indicated by the third cell access indication information.

In an implementation, obtaining the third cell access indication information includes:
in response to the cell access barred indication information, indicated by the second cell access indication information, indicating that camping on the cell is not allowed and in response to the intra-frequency cell reselection identification, indicated by the second cell access indication information, indicating that an intra-frequency cell reselection is allowed, obtaining the intra-frequency cell reselection identification indicated by the third cell access indication information; or
in response to the cell access barred indication information, indicated by the second cell access indication information, indicating that camping on the cell is not allowed, ignoring the intra-frequency cell reselection identification indicated by the second cell access indication information, and obtaining the intra-frequency cell reselection identification indicated by the third cell access indication information.

In an implementation, obtaining the third cell access indication information includes:
in response to the cell access barred indication information, indicated by the first cell access indication information, indicating that camping on the cell is not allowed and in response to the intra-frequency cell reselection identification, indicated by the first cell access indication information, indicating that the intra-frequency cell reselection is allowed, obtaining the intra-frequency cell reselection identification indicated by the third cell access indication information; or
in response to the cell access barred indication information, indicated by the first cell access indication information, indicating that camping on the cell is not allowed, ignoring the intra-frequency cell reselection identification indicated by the first cell access indication information, and obtaining the intra-frequency cell reselection identification indicated by the third cell access indication information.

In an implementation, obtaining the third cell access indication information includes:
in response to the cell access barred indication information, indicated by the first cell access indication information and the second cell access indication information, indicating that camping on the cell is not allowed and in response to the intra-frequency cell reselection identification, indicated by the first cell access indication information and the second cell access indication information, indicating that an intra-frequency cell reselection is allowed, obtaining the intra-frequency cell reselection identification indicated by the third cell access indication information; or
in response to the cell access barred indication information, indicated by the first cell access indication information and the second cell access indication information, indicating that camping on the cell is not allowed, ignoring the intra-frequency cell reselection identifications indicated by the first cell access indication information and the second cell access indication information, and obtaining the intra-frequency cell reselection identification indicated by the third cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1, and the second system information block 1 is configured to carry the cell access barred indication information indicated by the second cell access indication information.

In an implementation, the method further includes: ignoring the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information block 1, in which the first system information block 1 is different from the second system information block 1, and the second system information block 1 is configured to carry the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes cell access barred indication information and an intra-frequency cell reselection identification, and the cell access barred indication information and the intra-frequency cell reselection identification are carried by different signaling.

In an implementation, the method further includes: performing a cell access control based on the third cell access indication information.

In an implementation, performing the cell access control based on the third cell access indication information includes:
camping on a current cell in response to the cell access barred indication information, indicated by the third cell access indication information, indicating that camping on the current cell is allowed; or
performing an intra-frequency cell reselection in response to the cell access barred indication information, indicated by the third cell access indication information, indicating that camping on the cell is not allowed and in response to the intra-frequency cell reselection identification, indicated by the third cell access indication information, indicating that the intra-frequency cell reselection is allowed; or
withholding from camping on the current cell and withholding from performing the intra-frequency cell reselection in response to the cell access barred indication information, indicated by the third cell access indication information, indicating that camping on the cell is not allowed and in response to the intra-frequency cell reselection identification, indicated by the third cell access indication information, indicating that the intra-frequency cell reselection is not allowed.

In an implementation, performing the cell access control based on the third cell access indication information includes:
withholding from camping on the current cell and withholding from performing the intra-frequency cell reselection in response to the cell access barred indication information, indicated by the first cell access indication information, indicating that camping on the cell is not allowed and in response to the intra-frequency cell reselection identification, indicated by the first cell access indication information, indicating that the intra-frequency cell reselection is not allowed; or
withholding from camping on the current cell and withholding from performing the intra-frequency cell reselection, in response to the cell access barred indication information, indicated by the second cell access indication information, indicating that camping on the cell is not allowed and in response to the intra-frequency cell reselection identification, indicated by the second cell access indication information, indicating that the intra-frequency cell reselection is not allowed; or
withholding from camping on the current cell and withholding from performing the intra-frequency cell reselection, in response to the cell access barred indication information, indicated by the first cell access indication information and the second cell access indication information, indicating that camping on the cell is not allowed and in response to the intra-frequency cell reselection identification, indicated by the first cell access indication information and the second cell access indication information, indicating that the intra-frequency cell reselection is not allowed.

In a second aspect according to embodiments of the disclosure, a cell access control method is provided. The method is performed by a network device. The method includes:
sending cell access configuration information, in which the cell access configuration information is used for configuring first cell access indication information corresponding to a first type of terminal, second cell access indication information corresponding to a second type of terminal, and third cell access indication information corresponding to a third type of terminal, a capability of the first type of terminal is greater than a capability of the second type of terminal, and the capability of the second type of terminal is greater than a capability of the third type of terminal.

In an implementation, the first cell access indication information, the second cell access indication information and the third cell access indication information each includes cell access barred indication information for indicating whether to allow the terminal to camp on a cell.

In an implementation, the cell access barred indication information indicated by the third cell access indication information is different from the cell access barred indication information indicated by the second cell access indication information and the first cell access indication information.

In an implementation, the cell access barred indication information indicated by the third cell access indication information is the cell access barred indication information indicated by the second cell access indication information.

In an implementation, the first cell access indication information, the second cell access indication information, and the third cell access indication information each further includes an intra-frequency cell reselection identification for indicating whether the terminal is allowed to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1, and the second system information block 1 is used to carry the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information block 1, in which the first system information block 1 is different from a second system information block 1, and the second system information block 1 is used to carry the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes the cell access barred indication information and the intra-frequency cell reselection identification, and the cell access barred indication information and the intra-frequency cell reselection identification are carried by different signaling.

In a third aspect according to embodiments of the disclosure, a cell access control apparatus is provided. The apparatus includes:
a processing unit, configured to determine cell access configuration information, in which the cell access configuration information is used to configure first cell access indication information corresponding to a first type of terminal, second cell access indication information corresponding to a second type of terminal and third cell access indication information corresponding to the third type of terminal; a capability of the first type of terminal is greater than a capability of the second type of terminal, and the capability of the second type of terminal is greater than a capability of the third type of terminal; and
an obtaining unit, configured to obtain the third cell access indication information.

In an implementation, the first cell access indication information, the second cell access indication information, and the third cell access indication information each includes cell access barred indication information for indicating whether the terminal is allowed to camp on a cell.

In an implementation, the cell access barred indication information indicated by the third cell access indication information is different from the cell access barred indication information indicated by the second cell access indication information and the first cell access indication information.

In an implementation, in response to the cell access barred indication information, indicated by the first cell access indication information, indicating that camping on the cell is allowed and in response to the cell access barred indication information, indicated by the second cell access indication information, indicating that camping on the cell is allowed, the obtaining unit is configured to obtain the cell access barred indication information indicated by the third cell access indication information.

In an implementation, in response to the cell access barred indication information, indicated by the second cell access indication information, indicating that camping on the cell is allowed, the obtaining unit is configured to obtain the cell access barred indication information indicated by the third cell access indication information.

In an implementation, in response to the cell access barred indication information, indicated by the first cell access indication information, indicating that camping on the cell is allowed, the obtaining unit is configured to obtain the cell access barred indication information indicated by the third cell access indication information.

In an implementation, the cell access barred indication information indicated by the third cell access indication information is the cell access barred indication information indicated by the second cell access indication information.

In an implementation, the first cell access indication information, the second cell access indication information, and the third cell access indication information each further includes an intra-frequency cell reselection identification for indicating whether the terminal is allowed to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, in response to the cell access barred indication information, indicated by the third cell access indication information, indicating that camping on the cell is not allowed, the obtaining unit is configured to obtain the intra-frequency cell reselection identification indicated by the third cell access indication information.

In an implementation, in response to the cell access barred indication information, indicated by the second cell access indication information, indicating that camping on the cell is not allowed and in response to the intra-frequency cell reselection identification, indicated by the second cell access indication information, indicating that an intra-frequency cell reselection is allowed, the obtaining unit is configured to obtain the intra-frequency cell reselection identification indicated by the third cell access indication information; or
in response to the cell access barred indication information, indicated by the second cell access indication information, indicating that camping on the cell is not allowed, the obtaining unit is obtained to ignore the intra-frequency cell reselection identification indicated by the second cell access indication information and obtain the intra-frequency cell reselection identification indicated by the third cell access indication information.

In an implementation, in response to the cell access barred indication information, indicated by the first cell access indication information, indicating that camping on the cell is not allowed and in response to the intra-frequency cell reselection identification, indicated by the first cell access indication information, indicating that the intra-frequency cell reselection is allowed, the obtaining unit is configured to obtain the intra-frequency cell reselection identification indicated by the third cell access indication information; or
in response to the cell access barred indication information, indicated by the first cell access indication information, indicating that camping on the cell is not allowed, the obtaining unit is configured to ignore the intra-frequency cell reselection identification indicated by the first cell access indication information and obtain the intra-frequency cell reselection identification indicated by the third cell access indication information.

In an implementation, in response to the cell access barred indication information, indicated by the first cell access indication information and the second cell access indication information, indicating that camping on the cell is not allowed in response to the intra-frequency cell reselection identifications, indicated by the first cell access indication information and the second cell access indication information, indicating that the intra-frequency cell reselection is allowed, the obtaining unit is configured to obtain the intra-frequency cell reselection identification indicated by the third cell access indication information; or
in response to the cell access barred indication information, indicated by the first cell access indication information and the second cell access indication information, indicating that camping on the cell is not allowed, the obtaining unit is configured to ignore the intra-frequency cell reselection identifications indicated by the first cell access indication information and the second cell access indication information and obtain the intra-frequency cell reselection identification indicated by the third cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1, and the second system information block 1 is used to carry the cell access barred indication information indicated by the second cell access indication information.

In an implementation, the obtaining unit is further configured to ignore the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information block 1, the first system information block 1 is different from a second system information block 1, and the second system information block 1 is used to carry the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes cell access barred indication information and an intra-frequency cell reselection identification, and the cell access barred indication information and the intra-frequency cell reselection identification are carried in different signaling.

In an implementation, the processing unit is further configured to: perform a cell access control based on the third cell access indication information.

In an implementation, the processing unit is configured to perform the cell access control based on the third cell access indication information by:
camping on a current cell in response to the cell access barred indication information, indicated by the third cell access indication information, indicating that camping on the current cell is allowed; or
performing an intra-frequency cell reselection in response to the cell access barred indication information, indicated by the third cell access indication information, indicating that camping on the cell is not allowed and in response to the intra-frequency cell reselection identification, indicated by the third cell access indication information, indicating that the intra-frequency cell reselection is allowed; or
withholding from camping on the current cell and withholding from performing the intra-frequency cell reselection, in response to the cell access barred indication information, indicated by the third cell access indication information, indicating that camping on the cell is not allowed and in response to the intra-frequency cell reselection identification, indicated by the third cell access indication information, indicating that the intra-frequency cell reselection is not allowed.

In an implementation, the processing unit is configured to perform the cell access control based on the third cell access indication information by:
withholding from camping on the current cell and withholding from performing the intra-frequency cell reselection in response to the cell access barred indication information, indicated by the first cell access indication information, indicating that camping on the cell is not allowed and in response to the intra-frequency cell reselection identification, indicated by the first cell access indication information, indicating that the intra-frequency cell reselection is not allowed; or
withholding from camping on the current cell and withholding from performing the intra-frequency cell reselection in response to the cell access barred indication information, indicated by the second cell access indication information, indicating that camping on the cell is not allowed and in response to the intra-frequency cell reselection identification, indicated by the second cell access indication information, indicating that the intra-frequency cell reselection is not allowed; or
withholding from camping on the current cell and withholding from performing the intra-frequency cell reselection in response to the cell access barred indication information, indicated by the first cell access indication information and the second cell access indication information, indicating that camping on the cell is not allowed and in response to the intra-frequency cell reselection identification, indicated by the first cell access indication information and the second cell access indication information, indicating that the intra-frequency cell reselection is not allowed.

In a fourth aspect according to embodiments of the disclosure, a cell access control apparatus is provided. The apparatus includes:
a sending unit, configured to send cell access configuration information, in which the cell access configuration information is used to configure first cell access indication information corresponding to a first type of terminal, second cell access indication information corresponding to a second type of terminal, and third cell access indication information corresponding to a third type of terminal;
in which a capability of the first type of terminal is greater than a capability of the second type of terminal, and the capability of the second type of terminal is greater than a capability of the third type of terminal.

In an implementation, the first cell access indication information, the second cell access indication information, and the third cell access indication information each includes cell access barred indication information for indicating whether the terminal is allowed to camp on a cell.

In an implementation, the cell access barred indication information indicated by the third cell access indication information is different from the cell access barred indication information indicated by the second cell access indication information and the first cell access indication information.

In an implementation, the cell access barred indication information indicated by the third cell access indication information is the cell access barred indication information indicated by the second cell access indication information.

In an implementation, the first cell access indication information, the second cell access indication information, and the third cell access indication information each further includes an intra-frequency cell reselection identification for indicating whether the terminal is allowed to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1, and the second system information block 1 is used to carry the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information block 1, the first system information block 1 is different from a second system information block 1, and the second system information block 1 is used to carry the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes cell access barred indication information and an intra-frequency cell reselection identification, and the cell access barred indication information and the intra-frequency cell reselection identification are carried in different signaling.

In a fifth aspect according to embodiments of the disclosure, a cell access control device is provided. The device includes:
a processor; and
a memory for storing instructions executable by the processor;
in which the processor is configured to perform the method according to the first aspect or any one implementation of the first aspect.

In a sixth aspect according to embodiments of the disclosure, a cell access control device is provided. The device includes:
a processor; and
a memory for storing instructions executable by the processor;
in which the processor is configured to perform the method according to the second aspect or any one implementation of the second aspect.

In a seventh aspect according to embodiments of the disclosure, a storage medium is provided. The storage medium has instructions stored thereon. When the instructions stored on the storage medium are executed by the processor of a terminal, the terminal may perform the method according to the first aspect or any one implementation of the first aspect.

In an eighth aspect according to embodiments of the disclosure, a storage medium is provided. The storage medium has instructions stored thereon. When the instructions stored on the storage medium are executed by the processor of a terminal, the terminal may perform the method according to the second aspect or any one implementation of the second aspect.

The technical solution according to embodiments of the disclosure may include the following beneficial effects. The cell access configuration information includes first cell access indication information corresponding to the first type of terminal, the second cell access indication information corresponding to the second type of terminal, and the third cell access indication information corresponding to the third type of terminal, such that the cell access indication information are separately configured for multiple different types of terminals, thereby meeting the differentiated needs of different types of terminals for cell access, balancing the network load, and reducing unnecessary time delay and power consumption when the terminal accesses the cell.

It is understandable that the foregoing general description and the following detailed description are exemplary and explanatory only, and do not limit the disclosure.

### BRIEF DESCRIPTION OF THE DRAWINGS

The accompanying drawings, which are incorporated in and constitute a part of this specification, illustrate embodiments consistent with the disclosure and together with the description, serve to explain the principles of the disclosure.
FIG. 1 is a schematic diagram illustrating a wireless communication system according to an exemplary embodiment.
FIG. 2 is a flowchart illustrating a cell access control method according to an exemplary embodiment.
FIG. 3 is a flowchart illustrating a cell access control method according to an exemplary embodiment.
FIG. 4 is a block diagram illustrating a cell access control apparatus according to an exemplary embodiment.
FIG. 5 is a block diagram illustrating a cell access control apparatus according to an exemplary embodiment.
FIG. 6 is a block diagram illustrating a cell access control device according to an exemplary embodiment.
FIG. 7 is a block diagram illustrating a cell access control device according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the disclosure.

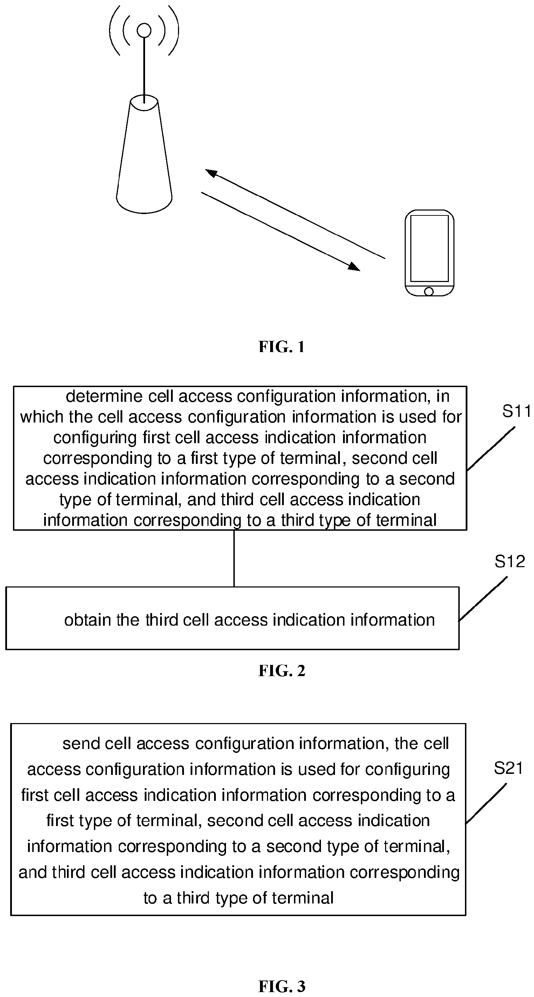

The cell access control method according to embodiments of the disclosure may be applied to a wireless communication system illustrated in FIG. 1. As illustrated in FIG. 1, the wireless communication system includes a terminal and a network device. The terminal and the network device may send and receive information through radio resources.

It is understandable that the wireless communication system illustrated in FIG. 1 is only a schematic illustration, and the wireless communication system may also include other network devices, such as a core network device, a wireless relay device, a wireless backhaul device, which is not illustrated in FIG. 1. Embodiments of the disclosure do not limit the number of network devices and terminals included in the wireless communication system.

It is further understandable that the wireless communication system according to embodiments of the disclosure is a network that provides wireless communication functions. The wireless communication system may use different communication technologies, such as code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA), or Carrier Sense Multiple Access with Collision Avoidance. Based on the capacity, the speed, the time delay and other factors of different networks, the network may be classified as a 2^{nd} generation (2G) network, a 3^{rd} generation (3G) network, a 4^{th} generation (4G) 4G networks or a future evolution network, such as a 5^{th} generation (5G) network. The 5G network may also be called New Radio (NR). For convenience of description, the disclosure sometimes refers to the wireless communication network as simply a network.

Further, the network device involved in the disclosure may also be called a wireless access network device. The wireless access network device may be a base station, an evolved node B, a home base station, an access point (AP) in a wireless fidelity (WIFI) system, a wireless relay node, a wireless backhaul node, a transmission point (TP) or a transmission and reception point (TRP). Or the wireless access network device may be a gNB in the NR system. Or the wireless access network device may be a component or a part of devices that constitutes the base station. When the wireless access network device is a vehicle-to-everything (V2X) communication system, the network device may also be a vehicle-mounted device. It is understandable that in embodiments of the disclosure, there are no limitations on the specific technology and specific device form used by the network device.

Furthermore, the terminal involved in the disclosure, also called terminal device, User Equipment (UE), Mobile Station (MS), Mobile Terminal (MT), or the like, is a kind of user equipment that provides voice and/or data connectivity to the user. For example, the terminal may be a handheld device or a vehicle-mounted device with wireless connectivity capabilities. Currently, some examples of terminals include Mobile Phone, Pocket Personal Computer (PPC), palm computer, Personal Digital Assistant (PDA), notebook computer, tablet computer, wearable device, or vehicle device. In addition, when the wireless access network device is a vehicle-to-everything (V2X) communication system, the terminal device may be a vehicle-mounted device. It is understandable that embodiments of the disclosure do not limit the specific technology and specific device form adopted by the terminal. For example, the terminal involved in embodiments of the disclosure includes a low-capability terminal designed in the 5G NR. The low-capability terminal is sometimes called Reduced capability UE, Redcap terminal, or simply NR-lite. The terminal involved in embodiments of the disclosure may also be an evolved low-capability terminal, and the evolved low-capability terminal may also be called an eRedcap terminal. The terminal involved in embodiments of the disclosure may also include a normal terminal. The normal terminal may also be called a normal UE. The normal terminal may also be understood as non-Redcap terminal and non-eRedcap terminal.

The terminal needs to perform cell access during wireless communication. In the related art, corresponding cell access configuration information is configured respectively for the normal terminal and the Redcap terminal.

For a normal terminal, the Master Information Block (MIB) contains 1-bit indication information for indicating whether to allow the terminal to camp on a cell for cell access control. The 1-bit indication information may also be called cell bar. When the cell bar is valid, the terminal is not allowed to camp on the cell. The terminal further phrases the intra-frequency cell reselection identification (IFRI) field contained in the MIB to check whether performing an intra-frequency cell reselection is allowed. By setting the IFRI field, when the system load in the same frequency band is relatively serious, it may configure that the intra-frequency cell reselection is not allowed for this type of terminal.

The Redcap terminal, having different capabilities from the normal terminal, may have a lower number of receiving antennas or smaller size/channel bandwidth. In some cases, in order to avoid affecting the service of the normal terminal, it is sometimes necessary to close the service of the Redcap terminal. In addition, a cell that supports the access of the Redcap terminal need to undergo corresponding network transformation and upgrades. Not all networks may naturally support the Redcap terminal. For a network that has not been upgraded, the cell access barred indication may be used to avoid the access of the Redcap terminal. In short, considering the above factors, it is necessary to introduce corresponding cell access control design for the Redcap terminal. Specifically, its working mechanism is as follows: Rel-17 Redcap terminal first reads the cell bar field in the MIB. If this field indicates that access to the cell is not allowed, the Redcap terminal further reads the IFRI field carried in the MIB to check if it is allowed to perform the intra-frequency cell reselection. If the cell bar field in the MIB indicates that the access to the cell is allowed, the terminal will further read the cell bar and IFRI fields specially configured for the Redcap terminal in the system information block 1 (SIB 1) to further check whether camping on the cell and/or performing the intra-frequency cell reselection is allowed. In addition, since different receiving antennas are configured with different transmission efficiencies and different coverage areas, the cell bar indication, carried in the SIB1, separately configured for the Redcap terminal needs to be defined separately for a terminal with one receiving antenna (1RX) and a terminal with two receiving antennas (2RX). The IFRI indication does not differentiate between the numbers of antennas. That is, the 1RX and the 2RX users use the same 1-bit indication bit for the IFRI indication.

The eRedcap terminal is further introduced in the related art. Compared with the Redcap terminal, the terminal capabilities of the eRedcap terminal are further reduced. For example, the bandwidth of the eRedcap terminal is further reduced to 5MHZ and the processing time is also relaxed. Therefore, if the same cell access control mechanism as that of Redcap terminal is used for cell access control of the eRedcap terminal, it may affect the scheduling and spectrum efficiency of the network and may also have a certain impact on the transmission performance of the terminal. Therefore, based on the introduction of the eRedcap terminal, a new cell access control method needs to be provided to balance the network load and avoid unnecessary delay or energy consumption overhead of the cell access of the terminal.

In the cell access control methods according to embodiments of the disclosure, corresponding cell access indication information is allocated and configured for different types of terminals to perform the cell access control.

In embodiments of the disclosure, there may be three different types of terminals, which are respectively referred to as the first type of terminal, the second type of terminal and the third type of terminal for convenience of description. Different types of terminals have different capabilities in embodiments of the disclosure. The capability of the first type of terminal is greater than the capability of the second type of terminal, and the capability of the second type of terminal is greater than the capability of the third type of terminal. In some possible implementations, the first type of terminal may be a normal terminal, the second type of terminal may be a Redcap terminal (or NR-lite for short), and the third type of terminal may be an eRedcap terminal.

For example, the capabilities of the terminal may include the transceiver bandwidth, the number of transceiver antennas, the maximum number of bits of the transmission block, the duplex type, or the processing time delay. The terminal capabilities may be different in one or more of the transceiver bandwidth, the number of transceiver antennas, the maximum number of bits of the transmission block, the duplex type, or the processing time delay. In an example, the first type of terminal may be a normal terminal, the second type of terminal may be a Redcap terminal, and the third type of terminal may be an eRedcap terminal.

FIG. 2 is a flowchart illustrating a cell access control method according to an exemplary embodiment. As illustrated in FIG. 2, the cell access control method is performed by a terminal. The terminal may be an eRedcap terminal, for example. The cell access control method includes the following steps S11 to S12.

In step S 11, cell access configuration information is determined.

The cell access configuration information is used for configuring cell access indication information for different types of terminals. For example, the cell access indication information is configured for at least one of: a first type of terminal, a second type of terminal, or a third type of terminal.

In embodiments of the disclosure, for convenience of description, the cell access indication information configured for the first type of terminal is called first cell access indication information, the cell access indication information configured for the second type of terminal is called second cell access indication information, and the cell access indication information configured for the third type of terminal is called third cell access indication information.

In an example, the cell access configuration information is used for configuring the first cell access indication information corresponding to the first type of terminal, the second cell access indication information corresponding to the second type of terminal, and the third cell access indication information corresponding to the third type of terminal.

In an implementation of the disclosure, the first type of terminal may be a normal terminal, the second type of terminal may be a Redcap terminal, and the third type of terminal may be n eRedcap terminal. The first cell access indication information may be cell access indication information configured for the normal terminal in the MIB. The second cell access indication information may be cell access indication information configured for the Redcap terminal in the MIB. The third cell access indication information may be separate cell access indication information configured for the eRedcap terminal. The separate cell access indication information is different from the first cell access indication information and different from the second cell access indication information. Certainly, in embodiments of the disclosure, the first cell access indication information, the second cell access indication information, and the third cell access indication information may be different fields of the same message or different messages. At the same time, the first cell access indication information, the second cell access indication information, and the third cell access indication information may be indicated by the same field in the same message (for example, using different values). The specific implementation manner is not limited thereto.

In embodiments of the disclosure, the cell access configuration information may be configured by a network device. The terminal receives the cell access configuration information configured by the network device for the terminal and determines, based on the cell access configuration information, whether to perform a corresponding operation. The corresponding operation may be at least one of: whether to access a current cell, whether to perform an intra-frequency cell reselection.

In an embodiment of the disclosure, the manner for the terminal to obtain the first cell access indication information and/or the second cell access indication information may adopt a solution similar to the conventional technology or any other appropriate solution, which will not be described in detail. Different from the conventional technology, the terminal will obtain the third cell access indication information.

In step S12, third cell access indication information is obtained.

In embodiments of the disclosure, the cell access configuration information is used for configuring the cell access indication information of different types of terminals. When the terminal is an eRedcap terminal, the cell access indication used for the cell access may be determined based on the third cell access indication information, which may balance the network load and improve the transmission performance for the terminal to perform the cell access.

The following describes the process in which the terminal obtains the third cell access indication information and performs the cell access.

In embodiments of the disclosure, the third cell access indication information may be carried in at least one of: MIB, SIB 1, other system information (OSI), or downlink control information (DCI).

In an implementation of the disclosure, the first cell access indication information, the second cell access indication information, and the third cell access indication information include cell access barred indication information (cell bar) for indicating whether to allow a terminal of a type corresponding to the cell access indication information to camp on the cell. In an implementation of the disclosure, the first cell access indication information, the second cell access indication information, and the third cell access indication information include cell access barred indication information (cell bar) for indicating whether to allow a terminal of a type corresponding to the cell access indication information to camp on the cell.

In embodiments of the disclosure, only the third cell access indication information may be included, or one or both of the first cell access indication information and the second cell access indication information may be additionally included.

For example, the cell access barred indication information included in the first cell access indication information may be cell bar indication information configured for the normal terminal. The first cell access indication information is configured to indicate whether to allow the first type of terminal to access the cell. The cell access barred indication information included in the second cell access indication information may be cell bar indication information configured for the Redcap terminal. The second cell access indication information is configured to indicate whether to allow the second type of terminal to access the cell. The cell access barred indication information included in the third cell access indication information may be cell bar indication information configured for the eRedcap terminal. The third cell access indication information is configured to indicate whether to allow the second type of terminal to access the cell. As mentioned above, the first cell access indication information, the second cell access indication information, and the third cell access indication information may be different fields of the same message or may be different messages. At the same time, the first cell access indication information, the second cell access indication information, and the third cell access indication information may be indicated by the same filed of the same message (for example, using different values). The specific implementation is not limited thereto. For example, if the cell access barred indication information included in the second cell access indication information may be the cell bar indication information configured for the Redcap terminal and the cell bar indication information configured for the eRedcap terminal, it may simultaneously indicate whether to allow the Redcap terminal and the eRedcap terminal to access the cell.

In embodiments of the disclosure, the cell access barred indication information included in the third cell access indication information may be carried in at least one of: MIB, SIB1, OSI, or DCI. For example, the separate cell bar indication information configured for the eRedcap terminal may be carried in at least one of: MIB, SIB1, OSI, or DCI.

In an implementation, in embodiments of the disclosure, the cell access barred indication information included in the third cell access indication information may be carried in the SIB1.

On the one hand, in embodiments of the disclosure, the SIB 1 carrying the cell access barred indication information included in the third cell access indication information is different from the SIB 1 carrying the cell access barred indication information included in the second indication information. For the convenience of description, the SIB1 carrying the cell access barred indication information included in the third cell access indication information is referred to as first SIB1, while the SIB 1 carrying the cell access barred indication information included in the second indication information is called second SIB 1. In an example, the first SIB1 is used for bearing the separate cell bar indication information configured for the eRedcap terminal. The second SIB 1 is used for bearing the cell bar indication information configured for the Redcap terminal. It is also understandable that the SIB1 configured by the network device in embodiments of the disclosure includes the first SIB 1 and the second SIB 1. In a possible implementation, the first SIB1 may be an SIB1 dedicated to the eRedcap terminal. Since the bandwidth supported by the eRedcap terminal is relatively small, the payload size of this single SIB1 may also be smaller.

On the other hand, in embodiments of the disclosure, the SIB1 carrying the cell access barred indication information included in the third cell access indication information and the SIB 1 carrying the cell access barred indication information included in the second indication information are the same.

In an implementation of embodiments of the disclosure, when the first SIB1 is configured, the first SIB may carry the cell access barred indication information included in the second indication information. In an example, both the cell bar indication information configured for the eRedcap terminal and the cell bar indication information configured for the Redcap terminal are carried in the first SIB1.

In another implementation of embodiments of the disclosure, the cell access barred indication information of the second type of terminal and the third type of terminal is indicated through the same SIB1. This SIB1 may be the second SIB1 in the conventional technology. In a possible implementation, the cell access barred indication information of the second type of terminal and the third type of terminal may be indicated through different fields of the same SIB 1 or through the same field. For example, the SIB1 includes a field used for indicating the cell bar indication information configured for the eRedcap terminal and a field used for indicating the cell bar indication information configured for the Redcap terminal. In a possible implementation, the cell bar indication information configured for the Redcap terminal and the cell bar indication information configured for the eRedcap terminal may be indicated through different values of the same field of the SIB1.

Further, in embodiments of the disclosure, when the third cell access indication information is carried in the DCI, the DCI may be a DCI for indicating the SIB1 (i.e., DCI for SIB1) or may be a DCI for indicating the OSI (i.e., DCI for OSI).

In embodiments of the disclosure, the cell access barred indication information included in the third cell access indication information may correspond to the same receiving antenna or may correspond to different receiving antennas. For example, the 1RX and 2RX eRedcap terminals may be indicated through the same cell access barred indication information or may be indicated through different cell access barred indication information. For example, 2 bits indicates the cell access barred indication information, in which the high bit is used for indicating whether the 1RX eRedcap terminal is allowed to access the cell and the low bit is used for indicating whether the 2RX eRedcap terminal is allowed to access the cell, or vice versa.

In an implementation, the cell access barred indication information indicated by the third cell access indication information is different from the cell access barred indication information indicated by the second cell access indication information and the first cell access indication information. In an example, the cell bar indication information configured for the eRedcap terminal is separate cell bar indication information configured for the normal terminal and the Redcap terminal. That is, the separate cell bar indication information is used for indicating the cell access barred indication for the eRedcap terminal and another cell bar indication information is used for indicating the cell access barred indication information of the normal terminal and the Redcap terminal. In another implementation, the cell access barred indication information indicated by the third cell access indication information is the cell access barred indication information indicated by the second cell access indication information. In an example, the cell bar indication information configured for the Redcap terminal is used as the cell bar indication information of the eRedcap terminal to indicate whether to allow the eRedcap terminal to access the cell. That is, one cell bar indication information is used for indicating the cell access barred indication information for the eRedcap terminal and the Redcap terminal.

In embodiments of the disclosure, the following describes the implementation process where the terminal obtains the third cell access indication information when the cell access barred indication information indicated by the third cell access indication information is different from the cell access barred indication information indicated by the second cell access indication information and the first cell access indication information.

In embodiments of the disclosure, when the eRedcap terminal accesses the cell, it may be determined whether to camp on the cell based on at least one of the cell access barred indication information indicated by the first cell access indication information, the cell access barred indication information indicated by the second cell access indication information, or the cell access barred indication information indicated by the third cell access indication information. For example, this may include the following.

Scenario 1: it is determined whether to camp on the current cell based on the cell access barred indication information indicated by the first cell access indication information, the cell access barred indication information indicated by the second cell access indication information, and the cell access barred indication information indicated by the third cell access indication information.

In response to the cell access barred indication information, indicated by the first cell access indication information, indicating that camping on the cell is allowed and in response to the cell access barred indication information, indicated by the second cell access indication information, indicating that camping on the cell is allowed, the terminal obtains the cell access barred indication information indicated by the third cell access indication information.

In an example, if the eRedcap terminal reads that the cell bar indication information in the MIB indicates that camping on the cell is allowed and reads that the corresponding indication field, configured for the Redcap terminal, of the cell bar indication information in SIB1 indicates that camping on the cell is allowed, the eRedcap terminal further reads the separate cell bar indication information specially designed for the eRedcap terminal.

In embodiments of the disclosure, when determining whether to camp on the current cell based on the cell access barred indication information indicated by the first cell access indication information, the cell access barred indication information indicated by the second cell access indication information and the third cell access barred indication information indicated by the first cell access indication information, the cell access barred indication information indicated by the third cell access indication information may be carried in the first SIB 1. For example, a separate SIB 1 is designed for the eRedcap terminal to carry the cell bar indication information corresponding to the eRedcap terminal.

In an implementation, the first SIB1 that carries the cell access barred indication information indicated by the third cell access indication information may carry the cell access barred indication information indicated by the second cell access indication information. For example, the SIB1 separately designed for the eRedcap terminal carries the cell bar indication information corresponding to the eRedcap terminal and carries the cell bar indication information corresponding to the Redcap terminal.

Scenario 2: it is determined whether to camp on the current cell based on the cell access barred indication information indicated by the second cell access indication information and the cell access barred indication information indicated by the third cell access indication information.

In response to the cell access barred indication information, indicated by the second cell access indication information, indicating that camping on the cell is allowed, the terminal further obtains the cell access barred indication information indicated by the third cell access indication information.

In an example, the eRedcap terminal ignores the cell bar indication information in the MIB and reads the cell bar indication information configured for the Redcap terminal in the SIB 1. If the cell bar indication information configured for the Redcap terminal indicates that camping on the cell is allowed, the eRedcap terminal further reads the separate cell bar indication information configured for the eRedcap terminal.

When determining whether to camp on the cell based on the cell access barred indication information indicated by the second cell access indication information and the cell access barred indication information indicated by the third cell access indication information, the cell access barred indication information indicated by the third cell access indication information may be carried in the first SIB 1. For example, a separate SIB1 is designed for the eRedcap terminal to bear the cell bar indication information corresponding to the eRedcap terminal.

In an implementation, the first SIB1 that carries the cell access barred indication information indicated by the third cell access indication information may carry the cell access barred indication information indicated by the second cell access indication information. For example, the separate SIB1 designed for the eRedcap terminal carries the cell bar indication information corresponding to the eRedcap terminal and the cell bar indication information corresponding to the Redcap terminal.

Situation 3: it is determine whether to camp on the current cell based on the cell access barred indication information indicated by the first cell access indication information and the cell access barred indication information indicated by the third cell access indication information.

In response to the cell access barred indication information, indicated by the first cell access indication information, indicating that camping on the cell is allowed, the cell access barred indication information indicated by the third cell access indication information is obtained.

In embodiments of the disclosure, when the eRedcap terminal determines whether to camp on the current cell based on the cell access barred indication information indicated by the first cell access indication information and the cell access barred indication information indicated by the third cell access indication information, the cell access barred indication information indicated by the second cell access indication information may be ignored.

In an example, when the eRedcap terminal reads that the cell bar indication information in the MIB indicates allowing the camping on the cell, the cell bar indication information configured for the Redcap terminal in the SIB 1 is ignored and the separate cell bar indication information configured for the eRedcap terminal is read.

In embodiments of the disclosure, the terminal determines whether to camp on the current cell based on the cell access barred indication information indicated by the first cell access indication information and the cell access barred indication information indicated by the third cell access indication information. This may include the following.

In a first aspect, the terminal may always ignore the cell access barred indication information indicated by the second cell access indication information.

In a second aspect, in embodiments of the disclosure, when the first SIB1 is used to carry the cell access barred information indicated by the third cell access indication information, the cell access barred indication information indicated by the second cell access indication information may be ignored.

In a third aspect, in embodiments of the disclosure, when the OSI is used to carry the cell access barred indication information indicated by the third cell access indication information, the cell access barred indication information indicated by the second cell access indication information may be ignored.

In a fourth aspect, in embodiments of the disclosure, when the DCI is used to carry the cell access barred indication information indicated by the third cell access indication information, the cell access barred indication information indicated by the second cell access indication information may be ignored.

Situation 4: it is determined whether to camp on the current cell based on the cell access barred indication information indicated by the third cell access indication information.

The eRedcap terminal ignores the cell access barred indication information indicated by the first cell access indication information, ignores the cell access barred indication information indicated by the second cell access indication information, and directly obtains the cell access barred indication information indicated by the third cell access indication information.

In an example, the terminal ignores the cell bar indication information in the MIB, ignores the cell bar indication information configured for the Redcap terminal in the SIB1, and reads the separate cell bar indication information configured for the eRedcap terminal.

In embodiments of the disclosure, when the cell access barred indication information indicated by the third cell access indication information is the cell access barred indication information indicated by the second cell access indication information, the cell access barred indication information indicated by the third cell access indication information may be carried in the first SIB 1. For example, a separate SIB1 is separately designed for the eRedcap terminal to carry the cell bar indication information corresponding to the eRedcap terminal.

In an implementation, the first SIB1 that carries the cell access barred indication information indicated by the third cell access indication information may also carry the cell access barred indication information indicated by the second cell access indication information. For example, the separate SIB 1 designed for the eRedcap terminal carries the cell bar indication information corresponding to the eRedcap terminal and carries the cell bar indication information corresponding to the Redcap terminal.

In embodiments of the disclosure, the terminal may determine, based on the cell access barred indication information involved in above embodiments, whether to camp on the current cell when accessing the cell. When the terminal determines to camp on the current cell, the terminal camps on the current cell. When the terminal determines that it cannot camp on the current cell, the terminal may further determine whether performing an intra-frequency cell reselection is possible.

In an implementation, the first cell access indication information, the second cell access indication information and the third cell access indication information in embodiments of the disclosure include IFRI used for indicating whether the terminal is allowed to perform the intra-frequency cell reselection. That is, the first cell access indication information, the second cell access indication information and the third cell access indication information may include the cell access barred indication information for indicating the cell bar, or the IFRI for indicating whether to allow the terminal to perform the intra-frequency cell reselection, and both the cell access barred indication information for indicating the cell bar and the IFRI for indicating whether to allow the terminal to perform the intra-frequency cell reselection.

Similar to foregoing embodiments, the IFRI for indicating whether the terminal is allowed to perform the intra-frequency cell reselection included in the first cell access indication information may be configured for the normal terminal. The first cell access indication information includes the IFRI for indicating whether to allow the first type of terminal to perform the intra-frequency cell reselection. The IFRI for indicating whether to allow the terminal to perform the intra-frequency cell reselection included in the second cell access indication information may be configured for the Redcap terminal. The second cell access indication information includes the IFRI for indicating whether to allow the second type of terminal to perform the intra-frequency cell reselection. The IFRI for indicating whether to allow the terminal to perform the intra-frequency cell reselection included in the third cell access indication information may be configured for the eRedcap terminal. The third cell access indication information includes the IFRI for indicating whether to allow the third type of terminal to perform the intra-frequency cell reselection.

In embodiments of the disclosure, only the third cell access indication information may be included; and one or both of the first cell access indication information and the second cell access indication information may also be additionally included.

As mentioned above, the first cell access indication information, the second cell access indication information, and the third cell access indication information may be different fields of the same message or may be different messages. At the same time, the first cell access indication information, the second cell access indication information, and the third cell access indication information may be indicated by the same field of the same message (for example, by using different values). The specific implementation is not limited thereto. For example, if the IFRI for indicating whether to allow the terminal to perform the intra-frequency cell reselection included in the second cell access indication information may be the cell bar indication information configured for the Redcap terminal and the cell bar indication information configured for the eRedcap terminal, then it may indicate simultaneously whether to allow the Redcap terminal and the eRedcap terminal to access the cell.

In following embodiments, an example where both the cell access barred indication information for indicating a cell bar and the IFRI for indicating whether to allow the terminal to perform the intra-frequency cell reselection are included will be described. However, those skilled in the art may understand that the following embodiments may include only the IFRI for indicating whether to allow the terminal to perform the intra-frequency cell reselection.

In the scenario where both the cell access barred indication information for indicating the cell bar and the IFRI for indicating whether the terminal is allowed to perform the intra-frequency cell reselection are included, the cell access barred indication information for indicating the cell bar and the IFRI for indicating whether the terminal is allowed to perform the intra-frequency cell reselection may be indicated through the same signaling or may be indicated through two different signaling.

For example, the IFRI included in the first cell access indication information may be an IFRI configured for a normal terminal. The IFRI included in the second cell access indication information may be an IFRI configured for a Redcap terminal. The IFRI included in the third cell access indication information may be an IFRI configured for an eRedcap terminal.

In embodiments of the disclosure, the IFRI included in the third cell access indication information may be carried in at least one of: MIB, SIB1, OSI, or DCI. For example, the separate IFRI configured for the eRedcap terminal may be carried in at least one of: MIB, SIB1, OSI, or DCI.

In an implementation, in embodiments of the disclosure, the IFRI included in the third cell access indication information may be carried in the SIB1.

On the one hand, in embodiments of the disclosure, the SIB1 carrying the IFRI included in the third cell access indication information is different from the SIB1 carrying the IFRI included in the second indication information. In embodiments of the disclosure, the SIB1 that carries the IFRI included in the third cell access indication information may be the first SIB1 mentioned above. In an example, the first SIB1 is used to carry the separate cell access barred indication information and the separate IFRI configured for the eRedcap terminal.

On the other hand, in embodiments of the disclosure, the SIB 1 that carries the IFRI included in the third cell access indication information and the SIB 1 that carries the IFRI included in the second cell access indication information are the same SIB1. That is, in embodiments of the disclosure, the IFRI included in the third cell access indication information may be carried in a second SIB 1.

In an implementation of the disclosure, when the first SIB1 is configured, the first SIB1 may be used to carry the IFRI included in the third cell access indication information and the IFRI included in the second cell access indication information. In an example, the IFRI configured for the eRedcap terminal and the IFRI configured for the Redcap terminal are both carried in the first SIB 1.

In another implementation of the disclosure, the first SIB1 may not be configured. The IFRIs of the first type of terminal, the second type of terminal and the third type of terminal are indicated by the same SIB 1. The SIB 1 carrying the IFRI of the first type of terminal, the second type of terminal and the third type of terminal may be the second SIB1 in the conventional technology or may be the SIB1 indicated by the DCI. In a possible implementation, the first SIB1 may be an SIB 1 dedicated to the eRedcap terminal. Since the bandwidth supported by the eRedcap terminal is relatively small, the payload size of this separate SIB1 may also be smaller.

In a possible implementation, the IFRIs of the second type of terminal and the third type of terminal are indicated by different fields or the same field of the same SIB 1. For example, the SIB 1 includes an IFRI for indicating the eRedcap terminal and another IFRI for indicating the Redcap terminal. In a possible implementation, the IFRI of the Redcap terminal and the IFRI of the eRedcap terminal may be indicated through different values of the same field of the SIB1.

Further, in embodiments of the disclosure, when the third cell access indication information is carried in the DCI, the DCI may be a DCI for indicating the SIB1 (i.e., DCI for SIB1) or may be a DCI for indicating the OSI (i.e., DCI for OSI).

In embodiments of the disclosure, the IFRI included in the third cell access indication information may correspond to the same receiving antenna or may correspond to different receiving antennas. For example, the 1RX eRedcap terminal and the 2RX eRedcap terminal may be indicated by the same IFRI or may be indicated by different IFRIs. For example, 2 bits indicate the IFRI, where the high bit is used for indicating whether the 1RX eRedcap terminal is allowed to perform the intra-frequency cell reselection and the low bit is used for indicating whether the 2RX eRedcap terminal is allowed to perform the intra-frequency cell reselection, or vice versa.

Further, in embodiments of the disclosure, in a scenario where the third cell access indication information includes the cell access barred indication information and the IFRI, the cell access barred indication information and the IFRI may be carried by different signaling. Certainly, the cell access barred indication information and the IFRI may be carried by the same signaling.

In an implementation, the IFRI indicated by the third cell access indication information is different from the IFRIs indicated by the second cell access indication information and the first cell access indication information. In an example, the IFRI configured for the eRedcap terminal is separate from the IFRIs configured for the normal terminal and the Redcap terminal. In another implementation, the IFRI included in the third cell access indication information is the IFRI included in the second cell access indication information. In an example, the IFRI configured for the Redcap terminal is used as the IFRI of the eRedcap terminal, to simultaneously indicate whether to allow the Redcap terminal and the eRedcap terminal to perform the intra-frequency cell reselection.

In embodiments of the disclosure, the following describes implementation process where the terminal obtains the IFRI in the third cell access indication information when the IFRI indicated by the third cell access indication information is separate from the IFRI indicated by the second cell access indication information.

In embodiments of the disclosure, in obtaining the IFRI included in the third cell access indication information by the eRedcap terminal, the eRedcap terminal may obtain the IFRI indicated by the third cell access indication information based on the cell access barred indication information indicated by the first cell access indication information, the cell access barred indication information indicated by the second cell access indication information and the cell access barred indication information indicated by the third cell access indication information. For example, embodiments of the disclosure may include the following scenarios of obtaining the IFRI indicated by the third cell access indication information.

Scenario 1: the IFRI indicated by the third cell access indication information is obtained based on the third cell access indication information.

When the third cell access indication information indicates both the cell bar and the IFRI, the IFRI indicated by the first cell access indication information is obtained in response to the cell access barred indication information, indicated by the third cell access indication information, indicating that camping on the cell is not allowed.

Scenario 2: the IFRI indicated by the third cell access indication information is obtained based on the second cell access indication information.

When the third cell access indication information indicates both the cell bar and the IFRI, on the one hand, the IFRI indicated by the third cell access indication information is obtained in response to the cell access barred indication information, indicated by the second cell access indication information, indicating that camping on the cell is not allowed and in response to the IFRI, indicated by the second cell access indication information, indicating that an intra-frequency cell reselection is allowed; on the other hand, the IFRI indicated by the second cell access indication information is ignored and the IFRI indicated by the third cell access indication information is obtained in response to the cell access barred indication information, indicated by the second cell access indication information, indicating that camping on the cell is not allowed.

Scenario 3: the IFRI indicated by the third cell access indication information is obtained based on the first cell access indication information.

When the third cell access indication information indicates both the cell bar and the IFRI, on the one hand, the IFRI indicated by the third cell access indication information is obtained in response to the cell access barred indication information, indicated by the first cell access indication information, indicating that camping on the cell is not allowed and in response to the IFRI, indicated by the first cell access indication information, indicating that the intra-frequency cell reselection is allowed; on the other hand, the IFRI indicated by the first cell access indication information is ignored and the IFRI indicated by the third cell access indication information is obtained in response to the cell access barred indication information, indicated by the first cell access indication information, indicating that camping on the cell is not allowed.

Scenario 4: the IFRI indicated by the third cell access indication information is obtained based on the first cell access indication information and the second cell access indication information.

When the third cell access indication information indicates both the cell bar and the IFRI, on the one hand, the IFRI indicated by the third cell access indication information is obtained in response to the cell access barred indication information, indicated by the first cell access indication information and the second cell access indication information, indicating that camping on the cell is allowed and in response to the IFRI, indicated by the first cell access indication information and the second cell access indication information, indicating that the intra-frequency cell reselection is allowed; on the other hand, the IFRIs indicated by the first cell access indication information and the second cell access indication information are ignored and the IFRI indicated by the third cell access indication information is obtained in response to the cell access barred indication information, indicated by the first cell access indication information and the second cell access indication information, indicating that camping on the cell is not allowed.

In embodiments of the disclosure, after obtaining the third cell access indication information, the terminal may perform the cell access control and/or the intra-frequency cell reselection based on the third cell access indication information.

In embodiments of the disclosure, performing the cell access control based on the third cell access indication information may include the following scenarios.

Scenario 1: camping on the current cell is allowed in response to the cell access barred indication information, indicated by the third cell access indication information, indicating that camping on the current cell is allowed.

Scenario 2: the intra-frequency cell reselection is performed in response to the cell access barred indication information, indicated by the third cell access indication information, indicating that camping on the cell is not allowed and in response to the IFRI, indicated by the third cell access indication information, indicating that the intra-frequency cell reselection is allowed.

Scenario 3, withholding from camping on the current cell and withholding from performing the intra-frequency cell reselection in response to the cell access barred indication information, indicated by the third cell access indication information, indicating that camping on the cell is not allowed and in response to the IFRI, indicated by the third cell access indication information, indicating that the intra-frequency cell reselection is not allowed.

Further, in embodiments of the disclosure, in performing the cell access control based on the third cell access indication information, the first cell access indication information and/or the second cell access indication information may be considered. Examples include the following scenarios.

Scenario 1: withholding from camping on the current cell and withholding from performing the intra-frequency cell reselection, in response to the cell access barred indication information, indicated by the first cell access indication information, indicating that camping on the cell is not allowed and in response to the IFRI, indicated by the first cell access indication information, indicating that the intra-frequency cell reselection is not allowed.

Scenario 2: withholding from camping on the current cell and withholding from performing the intra-frequency cell reselection in response to the cell access barred indication information, indicated by the second cell access indication information, indicating that camping on the cell is not allowed and in response to the IFRI, indicated by the second cell access indication information, indicating that performing the intra-frequency cell reselection is not allowed.

Scenario 3: withholding from camping on the current cell and withholding from performing the intra-frequency cell reselection in response to the cell access barred indication information, indicated by the first cell access indication information and the second cell access indication information, indicating that camping on the cell is not allowed and in response to the IFRI, indicated by the first cell access indication information and the second cell access indication information, indicating that performing the intra-frequency cell reselection is not allowed.

Based on the above methods according to embodiments of the disclosure, the first cell access indication information involved in the disclosure is used for controlling the cell access of the following one or more types of terminals: the first type of terminal, the second type of terminal, or the third type of terminal.

The second cell access indication information involved in the disclosure is used for controlling the cell access of following one or more types of terminals: the second type of terminal or the third type of terminal.

The third cell access indication information involved in the disclosure is used for controlling the cell access of the third type of terminal.

In embodiments of the disclosure, when the terminal performs the cell access based on one or more of the first cell access indication information, the second cell access indication information, and the third cell access indication information, the terminal may perform the cell access adaptive to the terminal's capabilities based on the capabilities of the terminal, thereby reducing the time delay and the energy consumption caused by the cell access of the terminal.

Based on the same idea, embodiments of the disclosure further provides a cell access control method performed by a network device.

FIG. 3 is a flowchart illustrating a cell access control method according to an exemplary embodiment. As illustrated in FIG. 3, the cell access control method is performed by a network device. The cell access control method includes the following step S21.

In step S21, cell access configuration information is sent.

The cell access configuration information is used for configuring cell access indication information for different types of terminals. For example, the cell access indication information is configured for at least one type of terminal: the first type of terminal, the second type of terminal, or the third type of terminal.

In an example, the cell access configuration information is used for configuring first cell access indication information corresponding to the first type of terminal, second cell access indication information corresponding to the second type of terminal, and third cell access indication information corresponding to the third type of terminal. The capability of the first type of terminal is greater than the capability of the second type of terminal, and the capability of the second type of terminal is greater than the capability of the third type of terminal. In some possible implementations, the first type of terminal may be a normal terminal; the second type of terminal may be a Redcap terminal (or NR-lite for short); and the third type of terminal may be an eRedcap terminal.

In an example, the first cell access indication information may be cell access indication information configured for the normal terminal in the MIB. The second cell access indication information may be cell access indication information configured for the Redcap terminal in the MIB. The third cell access indication information may be separate cell access indication information configured for the eRedcap terminal, and the separate cell access indication information is different from the first cell access indication information and different from the second cell access indication information. Certainly, in embodiments of the disclosure, the first cell access indication information, the second cell access indication information, and the third cell access indication information may be different fields of the same message or may be different messages. Also, the first cell access indication information, the second cell access indication information, and the third cell access indication information may be indicated by the same field in the same message (for example, through different values). The specific implementation manner is not limited thereto.

In an implementation, the third cell access indication information is carried in at least one of: MIB, SIB1, OSI, orDCI.

In an implementation, the SIB1 includes: a first SIB1 and a second SIB1.

The first SIB 1 is different from the second SIB 1. The first SIB 1 is used for carrying the cell access barred indication information indicated by the third cell access indication information. The second SIB1 is used for carrying the cell access barred indication information indicated by the second cell access indication information.

In an implementation, the first cell access indication information, the second cell access indication information, and the third cell access indication information include information include cell access barred indication information (cell bars) for indicating whether to allow a terminal of the type corresponding to the cell access indication information to camp on the cell. In an implementation of the disclosure, the first cell access indication information, the second cell access indication information, and the third cell access indication information include information each includes cell access barred indication information (cell bar) for indicating whether to allow a terminal of the type corresponding to the cell access indication information to camp on the cell

In embodiments of the disclosure, only the third cell access indication information may be included, and one or both of the first cell access indication information and the second cell access indication information may also be additionally included.

For example, the cell access barred indication information included in the first cell access indication information may be cell bar indication information configured for a normal terminal. The first cell access indication information is used for indicate whether the first type of terminal is allowed to access the cell. The cell access barred indication information included in the second cell access indication information may be cell bar indication information configured for a Redcap terminal. The second cell access indication information is used for indicating whether the second type terminal is allowed to access the cell. The cell access barred indication information included in the third cell access indication information may be cell bar indication information configured for an eRedcap terminal. The third cell access indication information is used for indicating whether the second type of terminal is allowed to access the cell. As mentioned above, the first cell access indication information, the second cell access indication information, and the third cell access indication information may be different fields of the same message or may be different messages. Also, the first cell access indication information, the second cell access indication information, and the third cell access indication information may be indicated by the same field of the same message (for example, using different values). The specific implementation is not limited thereto. For example, if the cell access barred indication information included in the second cell access indication information may be the cell bar indication information configured for the Redcap terminal and the cell bar indication information configured for the eRedcap terminal, it may simultaneously indicate whether the Redcap Terminal and the eRedcap terminal are allowed to access the cell.

In embodiments of the disclosure, the cell access barred indication information included in the third cell access indication information may be carried in at least one of: MIB, SIB1, OSI, or DCI. For example, the separate cell bar indication information configured for the eRedcap terminal may be carried in at least one of: MIB, SIB1, OSI, or DCI.

In an implementation, in embodiments of the disclosure, the cell access barred indication information included in the third cell access indication information may be carried in the SIB1.

On the one hand, in embodiments of the disclosure, the SIB 1 carrying the cell access barred indication information included in the third cell access indication information is different from the SIB 1 carrying the cell access barred indication information included in the second indication information. For convenience of description, the SIB1 carrying the cell access barred indication information included in the third cell access indication information is called the first SIB1, and the SIB 1 carrying the cell access barred indication information included in the second indication information is called the second SIB 1. In an example, the first SIB1 is used for carrying the separate cell bar indication information configured for the eRedcap terminal and the second SIB1 is used for carrying the cell bar indication information configured for the Redcap terminal. It is understandable that the SIB1 configured by the network device in embodiments of the disclosure includes the first SIB1 and the second SIB 1. In a possible implementation, the first SIB1 may be an SIB1 dedicated to the eRedcap terminal. Since the bandwidth supported by the eRedcap terminal is relatively small, the payload size of this separate SIB1 may also be smaller.

On the other hand, in embodiments of the disclosure, the SIB1 carrying the cell access barred indication information included in the third cell access indication information and the SIB 1 carrying the cell access barred indication information included in the second cell access indication information are the same SIB 1.

In an implementation of embodiments of the disclosure, when the first SIB1 is configured, the first SIB may be used to carry the cell access barred indication information included in the second indication information. In an example, the cell bar indication information configured for the eRedcap terminal and the cell bar indication information configured for the Redcap terminal are both carried in the first SIB 1.

In another implementation of embodiments of the disclosure, the cell access barred indication information of the second type of terminal and the third type of terminal is indicated through the same SIB 1. This SIB1 may be the second SIB1 in conventional technology. In a possible implementation, the cell access barred indication information of the second type of terminal and the cell access barred indication information of the third type of terminal may be indicated through different fields or the same field of the same SIB 1. For example, the SIB1 includes a field used for indicating the cell bar indication information configured for the eRedcap terminal and a field used for indicating the cell bar indication information configured for the Redcap terminal. In a possible implementation, the cell bar indication information configured for the Redcap terminal and the cell bar indication information configured for the eRedcap terminal may be indicated through different values of the same field of the SIB 1.

Further, in embodiments of the disclosure, when the third cell access indication information is carried in the DCI, the DCI may be a DCI for indicating the SIB1 (i.e., DCI for SIB1) or may be a DCI for indicating the OSI (i.e., DCI for OSI).

In embodiments of the disclosure, the cell access barred indication information included in the third cell access indication information may correspond to the same receiving antenna or may correspond to different receiving antennas. For example, the 1RX and 2RX eRedcap terminals may be indicated by the same cell access barred indication information or by different cell access barred indication information. For example, 2 bits indicates the cell access barred indication information, where the high bit is used for indicating whether the 1RX eRedcap terminal is allowed to access the cell and the low bit is used for indicating whether the 2RX eRedcap terminal allowed to access the cell.

In an implementation, the cell access barred indication information indicated by the third cell access indication information is different from the cell access barred indication information indicated by the second cell access indication information and the first cell access indication information. In an example, the cell bar indication information configured for the eRedcap terminal is separate from the cell bar indication information configured for the normal terminal and the Redcap terminal. That is, a separate cell bar indication information is used to indicate the cell access barred indication information for the eRedcap terminal, and another cell bar indication information is used to indicate the cell access barred indication information for the normal terminal and the Redcap terminal. In another implementation, the cell access barred indication information indicated by the third cell access indication information is the cell access barred indication information indicated by the second cell access indication information. In an example, the cell bar indication information configured for the Redcap terminal is used as the cell bar indication information of the eRedcap terminal to indicate whether the eRedcap terminal is allowed to access the cell. That is, one cell bar indication information is used to indicate the cell access barred indication information for the eRedcap terminal and the Redcap terminal.

In an implementation, the first cell access indication information, the second cell access indication information and the third cell access indication information in embodiments of the disclosure include IFRI for indicating whether the terminal is allowed to perform an intra-frequency cell reselection. That is, the first cell access indication information, the second cell access indication information and the third cell access indication information may include the cell access barred indication information for indicating the cell bar, IFRI for indicating whether the terminal is allowed to perform the intra-frequency cell reselection, or both the cell access barred indication information for indicating the cell bar and the IFRI for indicating whether the terminal is allowed to perform the intra-frequency cell reselection.

Similar to foregoing embodiments, the IFRI for indicating whether to allow the terminal to perform the intra-frequency cell reselection included in the first cell access indication information may be configured for a normal terminal. The first cell access indication information is used for indicating whether to allow the first type of terminal to perform the intra-frequency cell reselection. The IFRI for indicating whether to allow the terminal to perform the intra-frequency cell reselection included in the second cell access indication information may be configured for a Redcap terminal. The second cell access indication information is used for indicating whether to allow the second type of terminal to perform the intra-frequency cell reselection. The IFRI for indicating whether to allow the terminal to perform the intra-frequency cell reselection included in the third cell access indication information may be configured for an eRedcap terminal. The third cell access indication information is used for indicating whether to allow the third type of terminal to perform the intra-frequency cell reselection.

In embodiments of the disclosure, only the third cell access indication information may be included; and one or both of the first cell access indication information and the second cell access indication information may also be additionally included.

As mentioned above, the first cell access indication information, the second cell access indication information, and the third cell access indication information may be different fields of the same message or may be different messages. Also, the first cell access indication information, the second cell access indication information, and the third cell access indication information may be indicated by the same filed of the same message (for example, through different values). The specific implementation is not limited thereto. For example, if the IFRI for indicating whether to allow the terminal to perform the intra-frequency cell reselection included in the second cell access indication information may be the cell bar indication information configured for the Redcap terminal and the cell bar indication information configured for the eRedcap terminal, which may indicate simultaneously whether to allow the Redcap terminal and the eRedcap terminal to access the cell.

In the following embodiments, an example where both cell access barred indication information for indicating the cell bar and IFRI for indicating whether to allow the terminal to perform the intra-frequency cell reselection are included will be described. However, those skilled in the art may understand that the following embodiments may include only the IFRI for indicating whether to allow the terminal to perform the intra-frequency cell reselection.

In a scenario where both the cell access barred indication information for indicating the cell bar and the IFRI for indicating whether to allow the terminal to perform the intra-frequency cell reselection are included, the cell access barred indication information for indicating the cell bar and the IFRI for indicating whether to allow the terminal to perform the intra-frequency cell reselection may be indicated through the same signaling or may be indicated through two different signaling.

For example, the IFRI included in the first cell access indication information may be an IFRI configured for a normal terminal. The IFRI included in the second cell access indication information may be an IFRI configured for a Redcap terminal. The IFRI included in the third cell access indication information may be an IFRI configured for an eRedcap terminal.

In embodiments of the disclosure, the IFRI included in the third cell access indication information may be carried in at least one of: MIB, SIB1, OSI, or DCI. For example, the separate IFRI configured for the eRedcap terminal may be carried in at least one of: MIB, SIB1, OSI, or DCI.

In an implementation, in embodiments of the disclosure, the IFRI included in the third cell access indication information may be carried in the SIB 1.

On the one hand, in embodiments of the disclosure, the SIB1 carrying the IFRI included in the third cell access indication information is different from the SIB1 carrying the IFRI included in the second indication information. In embodiments of the disclosure, the SIB1 that carries the IFRI included in the third cell access indication information may be the first SIB 1 mentioned above. In an example, the first SIB1 is used for carrying separate cell access barred indication information and the separate IFRI configured for the eRedcap terminal.

On the other hand, in embodiments of the disclosure, the SIB1 bearing the IFRI included in the third cell access indication information and the SIB1 bearing the IFRI included in the second indication information are the same SIB1. That is, in embodiments of the disclosure, the IFRI included in the third cell access indication information may be carried by the second SIB1.

In an implementation of embodiments of the disclosure, when the first SIB1 is configured, the first SIB1 may be used to carry the IFRI included in the third cell access indication information and the IFRI included in the second cell access indication information. In an example, both the IFRI configured for the eRedcap terminal and the IFRI configured for the Redcap terminal are carried in the first SIB1.

In another implementation of the disclosure, the first SIB1 may not be configured. The IFRIs of the first type of terminal, the second type of terminal and the third type of terminal are indicated through the same SIB 1. The SIB1 carrying the IFRIs of the first type of terminal, the second type of terminal and the third type of terminal may be the second SIB1 in the conventional technology or may be the SIB1 indicated by the DCI. In a possible implementation, the first SIB 1 may be a SIB1 dedicated to the eRedcap terminal. Since the bandwidth supported by the eRedcap terminal is relatively small, the payload size of this separate SIB1 may also be smaller.

In a possible implementation, the IFRIs of the second type of terminal and the third type of terminal may be indicated through different fields or the same filed of the same SIB 1. For example, the SIB1 includes an IFRI for indicating the eRedcap terminal and another IFRI for indicating the Redcap terminal. In a possible implementation, the IFRI of the Redcap terminal and the IFRI of the eRedcap terminal may be indicated through different values of the same field of the SIB1.

Further, in embodiments of the disclosure, when the third cell access indication information is carried in the DCI, the DCI may be DCI for indicating the SIB1 (i.e., DCI for SIB 1) or may be DCI for indicating the OSI (i.e., DCI for OSI).

In embodiments of the disclosure, the IFRI included in the third cell access indication information may correspond to the same receiving antenna or may correspond to different receiving antennas. For example, the 1RX eRedcap terminal and the 2RX eRedcap terminal may be indicated by the same IFRI or may be indicated by different IFRIs. For example, 2 bits indicate the IFRI, where the high bit is used for indicating whether the 1RX eRedcap terminal is allowed to perform the intra-frequency cell reselection and the low bit is used for indicating whether the 2RX eRedcap terminal is allowed to perform the intra-frequency cell reselection, or vice versa.

Further, in embodiments of the disclosure, in a scenario where the third cell access indication information includes the cell access barred indication information and the IFRI, the cell access barred indication information and the IFRI may be carried by different signaling. Certainly, the cell access barred indication information and the IFRI may be carried by the same signaling.

In an implementation, the IFRI indicated by the third cell access indication information is different from the IFRIs indicated by the second cell access indication information and the first cell access indication information. In an example, the IFRI configured for the eRedcap terminal is separate from the IFRIs configured for the normal terminal and the Redcap terminal. In another implementation, the IFRI included in the third cell access indication information is the IFRI included in the second cell access indication information. In an example, the IFRI configured for the Redcap terminal is used as the IFRI of the eRedcap terminal, to simultaneously indicate whether to allow the Redcap terminal and the eRedcap terminal to perform the intra-frequency cell reselection.

In an implementation, the cell access barred indication information or the IFRI indicated by the third cell access indication information corresponds to the same receiving antenna or different receiving antennas.

In an implementation, the third cell access indication information includes the cell access barred indication information and the IFRI, and the cell access barred indication information and the IFRI are carried by different signaling.

With the cell access control method according to embodiments of the disclosure, the cell access configuration information configured by the network device includes first cell access indication information corresponding to the first type of terminal, the second cell access indication information corresponding to the second type of terminal, and the third cell access indication information corresponding to the third type of terminal, thereby realizing the indication of whether the terminal is allowed to access the cell depending on the capability of the terminal, balancing the network load and avoiding unnecessary time delay and energy overhead caused by the cell access of the terminal.

It is understandable that the cell access control method according to embodiments of the disclosure is suitable for the process of realizing cell access control during the interaction process between the network device and the terminal. Embodiments of the disclosure do not describe in detail the process of implementing the cell access control through the interaction between the network device and the terminal.

It is noteworthy that those skilled in the art may understand that the various implementations/embodiments mentioned above in embodiments of the disclosure may be used in conjunction with foregoing embodiments or may be used independently. No matter whether used alone or in conjunction with foregoing embodiments, the implementation principles are similar. In the implementation of the disclosure, some embodiments are described in terms of implementations used together. Certainly, those skilled in the art may understand that such description does not limit embodiments of the disclosure.

Based on the same concept, embodiments of the disclosure also provide a cell access control device.

It is understandable that, in order to realize the above functions, the cell access control apparatus according to embodiments of the disclosure includes corresponding hardware structures and/or software modules for performing various functions. Combined with the units and algorithm steps of each example disclosed in embodiments of the disclosure, embodiments of the disclosure may be implemented in the form of hardware or a combination of hardware and computer software. Whether a certain function is executed by hardware or in a manner that the computer software drives the hardware depends on the specific application and design constraints of the technical solution. Those skilled in the art may use different methods to implement the described functions for each specific application, but such implementation should not be considered to go beyond the scope of the technical solutions of embodiments of the disclosure.

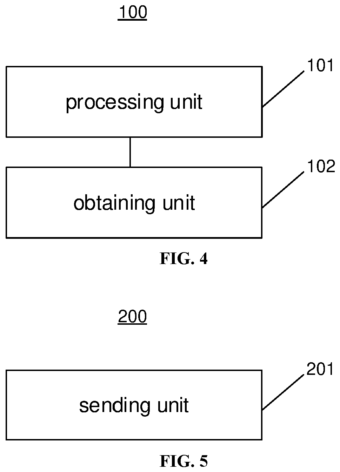

FIG. 4 is a block diagram illustrating a cell access control apparatus according to an exemplary embodiment. As illustrated in FIG. 4, the cell access control apparatus 100 is applied to a terminal. The apparatus 100 includes a processing unit 101 and an obtaining unit 102.

The processing unit 101 is configured to determine cell access configuration information. The cell access configuration information is used for configuring first cell access indication information corresponding to a first type of terminal, second cell access indication information corresponding to a second type of terminal, and third cell access indication information corresponding to a third type of terminal. A capability of the first type of terminal is greater than a capability of the second type of terminal, and the capability of the second type of terminal is greater than a capability of the third type of terminal. The obtaining unit 102 is configured to obtain the third cell access indication information.

In an implementation, the first cell access indication information, the second cell access indication information, and the third cell access indication information each includes cell access barred indication information for indicating whether to allow the terminal to camp on a cell.

In an implementation, the cell access barred indication information indicated by the third cell access indication information is different from the cell access barred indication information indicated by the second cell access indication information and the first cell access indication information.

In an implementation, in response to the cell access barred indication information, indicated by the first cell access indication information, indicating that camping on the cell is allowed and in response to the cell access barred indication information, indicated by the second cell access indication information, indicating that camping on the cell is allowed, the obtaining unit 102 is configured to obtain the cell access barred indication information indicated by the third cell access indication information.

In an implementation, in response to the cell access barred indication information, indicated by the second cell access indication information, indicating that camping on the cell is allowed, the obtaining unit 102 is configured to obtain the cell access barred indication information indicated by the third cell access indication information..

In an implementation, in response to the cell access barred indication information, indicated by the first cell access indication information, indicating that camping on the cell is allowed, the obtaining unit 102 is configured to obtain the cell access barred indication information indicated by the third cell access indication information.

In an implementation, the cell access barred indication information indicated by the third cell access indication information is the cell access barred indication information indicated by the second cell access indication information.

In an embodiment, the first cell access indication information, the second cell access indication information, and the third cell access indication information each further includes an intra-frequency cell reselection identification for indicating whether to allow the terminal to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, in response to the cell access barred indication information, indicated by the third cell access indication information, indicating that camping on the cell is not allowed, the obtaining unit 102 is configured to obtain the intra-frequency cell reselection identification indicated by the third cell access indication information.

In an embodiment, in response to the cell access barred indication information, indicated by the second cell access indication information, indicating that camping on the cell is not allowed and in response to the intra-frequency cell reselection identification, indicated by the second cell access indication information, indicating that performing the intra-frequency cell reselection is allowed, the obtaining unit 102 is configured to obtain the intra-frequency cell reselection identification indicated by the third cell access indication information; or
in response to the cell access barred indication information, indicated by the second cell access indication information, indicating that camping on the cell is not allowed, the obtaining unit 102 is configured to ignore the intra-frequency cell reselection identification indicated by the second cell access indication information and obtain the intra-frequency cell reselection identification indicated by the third cell access indication information.

In an implementation, in response to the cell access barred indication information, indicated by the first cell access indication information, indicating that camping on the cell is not allowed and in response to the intra-frequency cell reselection identification, indicated by the first cell access indication information, indicating that performing the intra-frequency cell reselection is allowed, the obtaining unit 102 is configured to obtain the intra-frequency cell reselection identification indicated by the third cell access indication information; or
in response to the cell access barred indication information, indicated by the first cell access indication information, indicating that camping on the cell is not allowed, the obtaining unit 102 is configured to ignore the intra-frequency cell reselection identification indicated by the first cell access indication information and obtain the intra-frequency cell reselection identification indicated by the third cell access indication information.

In an implementation, in response to the cell access barred indication information, indicated by the first cell access indication information and the second cell access indication information, indicating that camping on the cell is not allowed and in response to the intra-frequency cell reselection identifications, indicated by the first cell access indication information and the second cell access indication information, indicating that performing the intra-frequency cell reselection is allowed, the obtaining unit 102 is configured to obtain the intra-frequency cell reselection identification indicated by the third cell access indication information; or
in response to the cell access barred indication information, indicated by the first cell access indication information and the second cell access indication information, indicating that camping on the cell is not allowed, the obtaining unit 102 is configured to ignore the intra-frequency cell reselection identifications indicated by the first cell access indication information and the second cell access indication information and obtain the intra-frequency cell reselection identification indicated by the third cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1, and the second system information block 1 is used for carrying the cell access barred indication information indicated by the second cell access indication information.

In an implementation, the obtaining unit 102 is further configured to ignore the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information block 1, the first system information block 1 is different from a second system information block 1, and the second system information block 1 is used for carrying the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes cell access barred indication information and an intra-frequency cell reselection identification, and the cell access barred indication information and the intra-frequency cell reselection identification are carried by different signaling.

In an implementation, the processing unit 101 is further configured to perform a cell access control based on the third cell access indication information.

In an implementation, the processing unit 101 performs the cell access control based on the third cell access indication information by:
camping on a current cell, in response to the cell access barred indication information, indicated by the third cell access indication information, indicating that camping on the current cell is allowed; or
performing an intra-frequency cell reselection, in response to the cell access barred indication information, indicated by the third cell access indication information, indicating that camping on the cell is not allowed and in response to the intra-frequency cell reselection identification, indicated by the third cell access indication information, indicating that performing the intra-frequency cell reselection is allowed; or
withholding from camping on the current cell and withholding from performing the intra-frequency cell reselection, in response to the cell access barred indication information, indicated by the third cell access indication information, indicating that camping on the cell is not allowed and in response to the intra-frequency cell reselection identification, indicated by the third cell access indication information, indicating that performing the intra-frequency cell reselection is not allowed.

In an embodiment, the processing unit 101 is configured to perform the cell access control based on the third cell access indication information by:
withholding from camping on the current cell and withholding from performing the intra-frequency cell reselection, in response to the cell access barred indication information, indicated by the first cell access indication information, indicating that camping on the cell is not allowed and in response to the intra-frequency cell reselection identification, indicated by the first cell access indication information, indicating that performing the intra-frequency cell reselection is not allowed; or
withholding from camping on the current cell and withholding from performing the intra-frequency cell reselection, in response to the cell access barred indication information, indicated by the second cell access indication information, indicating that camping on the cell is not allowed and in response to the intra-frequency cell reselection identification, indicated by the second cell access indication information, indicating that performing the intra-frequency cell reselection is not allowed; or
withholding from camping on the current cell and withholding from performing the intra-frequency cell reselection, in response to the cell access barred indication information, indicated by the first cell access indication information and the second cell access indication information, indicating that camping on the cell is not allowed and in response to the intra-frequency cell reselection identifications, indicated by the first cell access indication information and the second cell access indication information indicate, indicating that performing the intra-frequency cell reselection is not allowed.

FIG. 5 is a block diagram illustrating a cell access control apparatus according to an exemplary embodiment. As illustrated in FIG. 5, the cell access control apparatus 200 is applied to a network device. The apparatus 200 includes a sending unit 201.

The sending unit 201 is configured to send cell access configuration information. The cell access configuration information is used for configuring first cell access indication information corresponding to a first type of terminal, second cell access indication information corresponding to a second type of terminal, and third cell access indication information corresponding to a third type of terminal.

A capability of the first type of terminal is greater than a capability of the second type of terminal, and the capability of the second type of terminal is greater than a capability of the third type of terminal.

In an implementation, the first cell access indication information, the second cell access indication information, and the third cell access indication information each includes cell access barred indication information for indicating whether the terminal is allowed to camp on the cell.

In an implementation, the cell access barred indication information indicated by the third cell access indication information is different from the cell access barred indication information indicated by the second cell access indication information and the first cell access indication information.

In an implementation, the cell access barred indication information indicated by the third cell access indication information is the cell access barred indication information indicated by the second cell access indication information.

In an implementation, the first cell access indication information, the second cell access indication information, and the third cell access indication information each further includes an intra-frequency cell reselection identification for indicating whether the terminal is allowed to perform an intra-frequency cell reselection.

In an implementation, the intra-frequency cell reselection identification indicated by the third cell access indication information is different from the intra-frequency cell reselection identifications indicated by the second cell access indication information and the first cell access indication information.

In an implementation, the intra-frequency cell reselection identification indicated by the third cell access indication information is the intra-frequency cell reselection identification indicated by the second cell access indication information.

In an implementation, the cell access barred indication information indicated by the third cell access indication information is carried in a first system information block 1, the first system information block 1 is different from a second system information block 1 and the second system information block 1 is used for carrying the cell access barred indication information indicated by the second cell access indication information.

In an implementation, the third cell access indication information is carried in at least one of:
a master information block, a system information block 1, other system information, or downlink control information.

In an implementation, the system information block 1 includes:
a first system information 1, in which the first system information block 1 is different from a second system information block 1 and the second system information block 1 is used for carrying the cell access barred indication information indicated by the second cell access indication information; and
the second system information block 1.

In an implementation, the cell access barred indication information or the intra-frequency cell reselection identification indicated by the third cell access indication information corresponds to the same receiving antenna or different receiving antennas.

In an implementation, the third cell access indication information includes cell access barred indication information and an intra-frequency cell reselection identification, and the cell access barred indication information and the intra-frequency cell reselection identification are carried by different signaling.

Regarding the apparatuses in above embodiments, the specific manner in which each module performs operations has been described in detail in method embodiments, which will not be described in detail here.

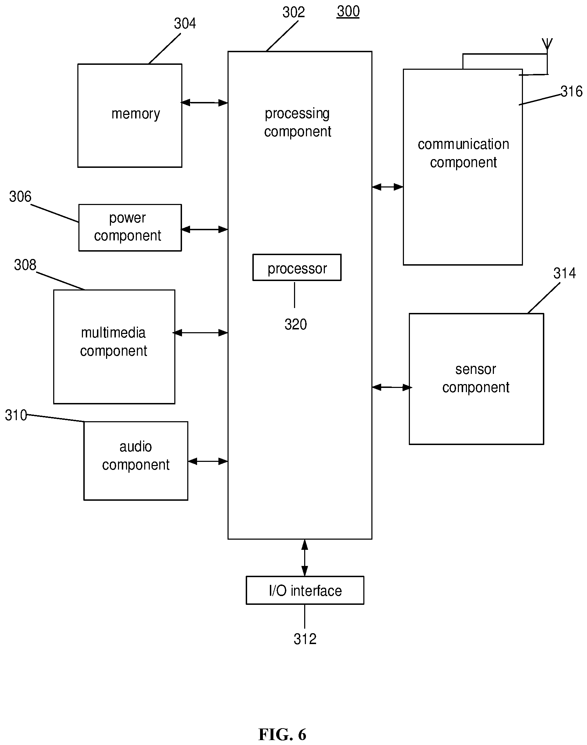

FIG. 6 is a block diagram illustrating a device 300 for cell access control according to an exemplary embodiment. For example, the device 300 may be a mobile phone, a computer, a digital broadcast terminal, a messaging device, a game console, a tablet device, a medical device, a fitness device, a personal digital assistant, or the like.

As illustrated in FIG. 6, the device 300 may include one or more of the following components: a processing component 302, a memory 304, a power component 306, a multimedia component 308, an audio component 310, an input/output (I/O) interface 312, a sensor component 314, or a communication component 316.

The processing component 302 generally controls overall operations of the device 300, such as operations associated with the display, the phone call, the data communication, the camera operation, and the recording operation. The processing component 302 may include one or more processors 320 to execute instructions to complete all or part of the steps of the above methods. In addition, the processing component 302 may include one or more modules that facilitate interaction between the processing component 302 and other components. For example, the processing component 302 may include a multimedia module to facilitate interaction between the multimedia component 308 and the processing component 302.

The memory 304 is configured to store various types of data to support operations at the device 300. Examples of such data include instructions for any application or method operating on the device 300, contact data, phonebook data, messages, pictures, videos, or others. The memory 304 may be implemented by any type of volatile or non-volatile storage device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk.

The power component 306 provides power to the various components of the device 300. The power components 306 may include a power management system, one or more power supplies, and other components associated with generating, managing, and distributing power to the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also detect the duration and the pressure associated with the touch or swipe action. In some embodiments, the multimedia component 308 includes a front-facing camera and/or a rear-facing camera. When the device 300 is in an operating mode, such as a shooting mode or a video mode, the front-facing camera and/or the rear-facing camera may receive external multimedia data. Each front-facing camera and rear-facing camera may be a fixed optical lens system or have a focal length and optical zoom capabilities.

The audio component 310 is configured to output and/or input audio signals. For example, the audio component 310 includes a microphone (MIC) configured to receive external audio signals when the device 300 is in an operating mode, such as a call mode, a recording mode, or a speech recognition mode. The received audio signal may be further stored in memory 304 or sent via the communication component 316. In some embodiments, the audio component 310 also includes a speaker for outputting the audio signal.

The I/O interface 312 provides an interface between the processing component 302 and a peripheral interface module. The peripheral interface module may be a keyboard, a click wheel, a button, or others. These buttons may include, but are not limited to: a home button, a volume button, start button, and lock button.

The sensor component 314 includes one or more sensors for providing status assessment on various aspects of the device 300. For example, the sensor component 314 may detect the open/closed state of the device 300, the relative positioning of a component, such as the display or the keypad of the device 300, and the sensor component 314 may also detect a change in the position of the device 300 or a component of the device 300, the presence or absence of user contact with the device 300, the orientation or acceleration/deceleration of the device 300, and the temperature change of the device 300. The sensor component 314 may include a proximity sensor configured to detect the presence of nearby objects in the absence of any physical contact. The sensor component 314 may also include a light sensor, such as a CMOS or CCD image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as WiFi, 2G, 3G, or a combination thereof. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate the short-range communication. For example, the NFC module may be implemented based on radio frequency identification (RFID) technology, infrared data association (IrDA) technology, ultra-wideband (UWB) technology, Bluetooth (BT) technology or other technologies.

In an exemplary embodiment, the device 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for executing the above methods.

In an exemplary embodiment, there is provided a non-transitory computer-readable storage medium including instructions, such as a memory 304 including instructions, which may be executed by the processor 320 of the device 300 to perform the above methods. For example, the non-transitory computer-readable storage medium may be a ROM, a random access memory (RAM), a CD-ROM, a magnetic tape, a floppy disk, or an optical data storage device.

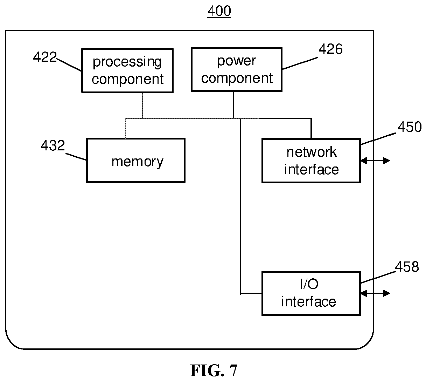

FIG. 7 is a block diagram illustrating a device 400 for cell access control according to an exemplary embodiment. For example, the device 400 may be provided as a network device. As illustrated FIG. 7, the device 400 includes a processing component 422, which further includes one or more processors, and memory resources represented by a memory 432 for storing instructions, such as application programs, executable by the processing component 422. The application program stored in the memory 432 may include one or more modules, each corresponding to a set of instructions. In addition, the processing component 422 is configured to execute instructions to perform the above methods.

The device 400 may also include a power component 426 configured to perform the power management of the device 400, a wired or wireless network interface 450 configured to connect the device 400 to a network, and an input-output (I/O) interface 458. The device 400 may operate based on an operating system stored in the memory 432, such as Windows Server^{™}, Mac OS X^{™}, Unix^{™}, Linux^{™}, FreeBSD^{™} or the like.

In an embodiment, there is provided a non-transitory computer-readable storage medium including instructions, such as a memory 432 including instructions, which are executable by the processing component 422 of the device 400 to perform the above methods. For example, the non-transitory computer-readable storage medium may be a ROM, a random access memory (RAM), a CD-ROM, a magnetic tape, a floppy disk, or an optical data storage device.

It is further understandable that the term "a plurality of" in the disclosure refers to two or more, and other quantifiers are similar. The term "and/or" describes the relationship between related objects, indicating that there may be three relationships. For example, A and/or B means: A exists alone, A and B exist simultaneously, and B exists alone. The character "/" generally indicates that the objects before and after this character are in an "or" relationship. The singular forms "a", "an" and "the" are also intended to include the plural unless the context clearly dictates otherwise.

It is further understandable that the terms "first", "second", etc. are used to describe various information, but such information should not be limited to these terms. These terms are only used to distinguish information of the same type from each other and do not imply a specific order or importance. In fact, expressions such as "first" and "second" may be used interchangeably. For example, without departing from the scope of the disclosure, the first information may also be called second information, and similarly, the second information may also be called first information.

It will be further understandable that although the operations are described in a specific order in the drawings in embodiments of the disclosure, this should not be understood as requiring that these operations are performed in the specific order shown or in a serial order or that all shown operations are performed to obtain the desired result. In certain circumstances, multitasking and parallel processing may be advantageous.

Other embodiments of the disclosure will be readily apparent to those skilled in the art from consideration of the specification and practice of the disclosure herein. The disclosure is intended to cover any variation, use, or adaptation of the disclosure that follow the general principles of the disclosure and include common knowledge or common technical means in the technical field that are not disclosed in the disclosure.

It is understandable that the disclosure is not limited to the precise structures described above and illustrated in the accompanying drawings, and various modifications and changes may be made without departing from the scope of the disclosure. The scope of the disclosure is limited only by the appended claims.

## Claims

1. A cell access control method, performed by a terminal, comprising:
determining cell access configuration information, wherein the cell access configuration information is used for configuring first cell access indication information corresponding to a first type of terminal, second cell access indication information corresponding to a second type of terminal, and third cell access indication information corresponding to a third type of terminal;
wherein a capability of the first type of terminal is greater than a capability of the second type of terminal, and the capability of the second type of terminal is greater than a capability of the third type of terminal; and
obtaining the third cell access indication information.

2. The method of claim 1, wherein the first cell access indication information, the second cell access indication information and the third cell access indication information each comprises cell access barred indication information for indicating whether to allow the terminal to camp on a cell.

3. The method of claim 2, wherein the cell access barred indication information indicated by the third cell access indication information is different from the cell access barred indication information indicated by the second cell access indication information and the first cell access indication information.

4. The method of claim 3, wherein obtaining the third cell access indication information comprises:
obtaining the cell access barred indication information indicated by the third cell access indication information, in response to the cell access barred indication information, indicated by the first cell access indication information, indicating that camping on the cell is allowed and in response to the cell access barred indication information, indicated by the second cell access indication information, indicating that camping on the cell is allowed.

5. The method of claim 3, wherein obtaining the third cell access indication information comprises:
obtaining the cell access barred indication information indicated by the third cell access indication information, in response to the cell access barred indication information, indicated by the second cell access indication information, indicating that camping on the cell is allowed.

6. The method of claim 3, wherein obtaining the third cell access indication information comprises:
obtaining the cell access barred indication information indicated by the third cell access indication information, in response to the cell access barred indication information, indicated by the first cell access indication information, indicating that camping on the cell is allowed.

7. The method of claim 2, wherein the cell access barred indication information indicated by the third cell access indication information is the cell access barred indication information indicated by the second cell access indication information.

8. The method of any one of claims 2 to 7, wherein the first cell access indication information, the second cell access indication information and the third cell access indication information each further comprises an intra-frequency cell reselection identification for indicating whether to allow the terminal to perform an intra-frequency cell reselection.

9. The method of claim 8, wherein the intra-frequency cell reselection identification indicated by the third cell access indication information is different from the intra-frequency cell reselection identifications indicated by the second cell access indication information and the first cell access indication information.

10. The method of claim 9, wherein obtaining the third cell access indication information comprises:
obtaining the intra-frequency cell reselection identification indicated by the third cell access indication information in response to the cell access barred indication information, indicated by the third cell access indication information, indicating that camping on the cell is not allowed.

11. The method of claim 9, wherein obtaining the third cell access indication information comprises:
obtaining the intra-frequency cell reselection identification indicated by the third cell access indication information, in response to the cell access barred indication information, indicated by the second cell access indication information, indicating that camping on the cell is not allowed and in response to the intra-frequency cell reselection identification, indicated by the second cell access indication information, indicating that performing the intra-frequency cell reselection is allowed; or
ignoring the intra-frequency cell reselection identification indicated by the second cell access indication information and obtaining the intra-frequency cell reselection identification indicated by the third cell access indication information, in response to the cell access barred indication information, indicated by the second cell access indication information, indicating that camping on the cell is not allowed.

12. The method of claim 9, wherein obtaining the third cell access indication information comprises:
obtaining the intra-frequency cell reselection identification indicated by the third cell access indication information, in response to the cell access barred indication information, indicated by the first cell access indication information, indicating that camping on the cell is not allowed and in response to the intra-frequency cell reselection identification, indicated by the first cell access indication information, indicating that performing the intra-frequency cell reselection is allowed; or
ignoring the intra-frequency cell reselection identification indicated by the first cell access indication information and obtaining the intra-frequency cell reselection identification indicated by the third cell access indication information, in response to the cell access barred indication information, indicated by the first cell access indication information, indicating that camping on the cell is not allowed.

13. The method of claim 9, wherein obtaining the third cell access indication information comprises:
obtaining the intra-frequency cell reselection identification indicated by the third cell access indication information, in response to the cell access barred indication information, indicated by the first cell access indication information and the second cell access indication information, indicating that camping on the cell is not allowed and in response to the intra-frequency cell reselection identifications, indicated by the first cell access indication information and the second cell access indication information, indicating that performing the intra-frequency cell reselection is allowed; or
ignoring the intra-frequency cell reselection identifications indicated by the first cell access indication information and the second cell access indication information, and obtaining the intra-frequency cell reselection identification indicated by the third cell access indication information, in response to the cell access barred indication information, indicated by the first cell access indication information and the second cell access indication information, indicating that camping on the cell is not allowed.

14. The method of claim 8, wherein the intra-frequency cell reselection identification indicated by the third cell access indication information is the intra-frequency cell reselection identification indicated by the second cell access indication information.

15. The method of any one of claims 3 to 14, wherein the cell access barred indication information indicated by the third cell access indication information is carried in a first system information block 1, the first system information block 1 is different from a second system information block 1, and the second system information block 1 is used for carrying the cell access barred indication information indicated by the second cell access indication information.

16. The method of claim 6 or 15, further comprising:
ignoring the cell access barred indication information indicated by the second cell access indication information.

17. The method of any one of claims 1 to 16, wherein the third cell access indication information is carried in at least one of:
a master information block, a system information block 1, other system information, or downlink control information.

18. The method of claim 17, wherein the system information block 1 comprises:
a first system information block 1, wherein the first system information block 1 is different from a second system information block 1, and the second system information block 1 is used for carrying cell access barred indication information indicated by the second cell access indication information; and
the second system information block 1.

19. The method of any one of claims 17 to 18, wherein cell access barred indication information or an intra-frequency cell reselection identification indicated by the third cell access indication information corresponds to the same receiving antenna or different receiving antennas.

20. The method of any one of claims 17 to 19, wherein the third cell access indication information comprises cell access barred indication information and an intra-frequency cell reselection identification, and the cell access barred indication information and the intra-frequency cell reselection identification are carried by different signaling.

21. The method of any one of claims 1 to 20, further comprising:
performing a cell access control based on the third cell access indication information.

22. The method of claim 21, wherein performing the cell access control based on the third cell access indication information comprises:
camping on a current cell in response to cell access barred indication information, indicated by the third cell access indication information, indicating that camping on the current cell is allowed; or
performing an intra-frequency cell reselection in response to cell access barred indication information, indicated by the third cell access indication information, indicating that camping on a cell is not allowed and in response to an intra-frequency cell reselection identification, indicated by the third cell access indication information, indicating that performing the intra-frequency cell reselection is allowed; or
withholding from camping on a current cell and withholding from performing an intra-frequency cell reselection, in response to cell access barred indication information, indicated by the third cell access indication information, indicating that camping on a cell is not allowed and in response to an intra-frequency cell reselection identification, indicated by the third cell access indication information, indicating that performing the intra-frequency cell reselection is not allowed.

23. The method of claim 21, wherein performing the cell access control based on the third cell access indication information comprises:
withholding from camping on a current cell and withholding from performing an intra-frequency cell reselection, in response to cell access barred indication information, indicated by the first cell access indication information, indicating that camping on a cell is not allowed and in response to an intra-frequency cell reselection identification, indicated by the first cell access indication information, indicating that performing the intra-frequency cell reselection is not allowed; or
withholding from camping on a current cell and withholding from performing an intra-frequency cell reselection, in response to cell access barred indication information, indicated by the second cell access indication information, indicating that camping on a cell is not allowed and in response to an intra-frequency cell reselection identification, indicated by the second cell access indication information, indicating that performing the intra-frequency cell reselection is not allowed; or
withholding from camping on a current cell and withholding from performing an intra-frequency cell reselection, in response to cell access barred indication information, indicated by the first cell access indication information and the second cell access indication information, indicating that camping on a cell is not allowed and in response to intra-frequency cell reselection identifications, indicated by the first cell access indication information and the second cell access indication information, indicating that performing the intra-frequency cell reselection is not allowed.

24. A cell access control method, performed by a network device, comprising:
sending cell access configuration information, wherein the cell access configuration information is used for configuring first cell access indication information corresponding to a first type of terminal, second cell access indication information corresponding to a second type of terminal, and third cell access indication information corresponding to a third type of terminal;
wherein a capability of the first type of terminal is greater than a capability of the second type of terminal, and the capability of the second type of terminal is greater than a capability of the third type of terminal.

25. The method of claim 24, wherein the first cell access indication information, the second cell access indication information and the third cell access indication information each comprises cell access barred indication information for indicating whether to allow a terminal to camp on a cell.

26. The method of claim 25, wherein the cell access barred indication information indicated by the third cell access indication information is different from the cell access barred indication information indicated by the first cell access indication information and the second cell access indication information.

27. The method of claim 25, wherein the cell access barred indication information indicated by the third cell access indication information is the cell access barred indication information indicated by the second cell access indication information.

28. The method of any one of claims 25 to 27, wherein the first cell access indication information, the second cell access indication information and the third cell access indication information each further comprises an intra-frequency cell reselection identification for indicating whether to allow the terminal to perform an intra-frequency cell reselection.

29. The method of claim 28, wherein the intra-frequency cell reselection identification indicated by the third cell access indication information is different from the intra-frequency cell reselection identifications indicated by the second cell access indication information and the first cell access indication information.

30. The method of claim 29, wherein the intra-frequency cell reselection identification indicated by the third cell access indication information is the intra-frequency cell reselection identification indicated by the second cell access indication information.

31. The method of claim 29 or 30, wherein the cell access barred indication information indicated by the third cell access indication information is carried in a first system information block 1, the first system information block 1 is different from a second system information block 1, and the second system information block 1 is used for carrying the cell access barred indication information indicated by the second cell access indication information.

32. The method of any one of claims 24 to 31, wherein the third cell access indication information is carried in at least one of:
a master information block, a system information block 1, other system information, or downlink control information.

33. The method of claim 32, wherein the system information block 1 comprises:
a first system information block 1, wherein the first system information block 1 is different from a second system information block 1, and the second system information block 1 is used for carrying cell access barred indication information indicated by the second cell access indication information; and
the second system information block 1.

34. The method of any one of claims 28 to 33, wherein the cell access barred indication information or the intra-frequency cell reselection identification indicated by the third cell access indication information corresponds to the same receiving antenna or different receiving antennas.

35. The method of any one of claims 28 to 34, wherein the third cell access indication information comprises the cell access barred indication information and the intra-frequency cell reselection identification, and the cell access barred indication information and the intra-frequency cell reselection identification are carried by different signaling.

36. A cell access control apparatus, comprising:
a processing unit, configured to determine cell access configuration information, wherein the cell access configuration information is used for configuring first cell access indication information corresponding to a first type of terminal, second cell access indication information corresponding to a second type of terminal, and third cell access indication information corresponding to a third type of terminal;
wherein a capability of the first type of terminal is greater than a capability of the second type of terminal, and the capability of the second type of terminal is greater than a capability of the third type of terminal;
an obtaining unit, configured to obtain the third cell access indication information.

37. A cell access control apparatus, comprising:
a sending unit, configured to send cell access configuration information, wherein the cell access configuration information is used for configuring first cell access indication information corresponding to a first type of terminal, second cell access indication information corresponding to a second type of terminal, and third cell access indication information corresponding to a third type of terminal;
wherein a capability of the first type of terminal is greater than a capability of the second type of terminal, and the capability of the second type of terminal is greater than a capability of the third type of terminal.

38. A cell access control device, comprising:
a processor; and
a memory for storing instructions executable by the processor;
wherein the processor is configured to perform the method of any one of claims 1 to 23 or perform the method of any one of claims 24 to 25.

39. A storage medium, having instructions stored thereon, wherein when the instructions in the storage medium are executed by a processor of a terminal, the terminal is caused to perform the method of any one of claims 1 to 23 or when the instructions in the storage medium are executed by a processor of a network device, the network device is caused to perform the method of any one of claims 24 to 25.
